# EUROPEAN PATENT APPLICATION

(11) **EP 2 658 178 A1**
(43) Date of publication of application: **30.10.2013**
(21) Application number: 12165468.5
(22) Date of filing: 25.04.2012
(51) Int. Cl.: H04L 12/26

(54) **Estimating network data throughput system and method**

(71) Applicant: Waterford Institute Of Technology, Waterford (IE)
(72) Inventor: Davy, Alan, Waterford (IE)
(74) Representative: Purdylucey Intellectual Property

(57) **Abstract**

A method of estimating data throughput between at least two nodes in a data communication network is provided, wherein at least two networked data communication devices are respectively configured as a source node and a sink node. A maximum packet delay target parameter (d_{Max}) and a violation probability target parameter (p_{Delay}) are initially set. A predetermined number of data packets are sent from the source node to the sink node according to a first constant data transmission rate. The predetermined number of data packets are received at the sink node, which calculates a packet delay distribution and a probability (Vᵢₒₗ) of violating the maximum packet delay target parameter (d_{Max}) based on the calculated distribution. The sink node determines whether the calculated probability (Vᵢₒₗ) is equivalent to the violation probability target p_{Delay} whereby the rate R constitutes the data throughput capacity between the at least two nodes when the condition is true.

## Description

### Field of the Invention

The present invention relates to a distributed method and system for measuring data carrying capacity between end nodes in a network.

### Background of the Invention

As ever increasing amounts of data traffic are carried across data communication networks, corresponding to ever more diverse, delay-sensitive distributed applications such voice over IP telephony, audio and/or video streaming and data file sharing, there is a need to understand the delay-sensitive capabilities of an end-to-end network path.

Data for delay-sensitive distributed applications is distributed over data communication networks like any other data, in that a source node connected to the communications network sends data packets to a target node, likewise connected to the communications network. The communications network is comprised of a number of nodes known as routers and switches that route and forward data packets through the network between nodes connected thereto, and the data traffic sent by the source node effectively follows a path of intermediate nodes which it must traverse in order to arrive at the target node.

Typical metrics estimate the remaining residual bandwidth available between two end nodes across a network path, which can be used before congestion occurs. Known techniques for providing these metrics rely upon one or more of one-way delay, jitter, round-trip time, packet loss and bandwidth variables, and estimate end-to-end available bandwidth. A number of available bandwidth tools have been licensed for use in P2P content distribution networks, in particular the BART tool distributed by Ericsson AB, Sweden. However theses techniques do not provide strict guarantees on end-to-end packet delay target violations, and the metrics do not associate maximum throughput bounded by packet delay targets. Available bandwidth estimations only report a measurement of residual bandwidth available between two end nodes with no strict binding to Quality of Service guarantees over that metric. One-way packet delay only provides a measurement of latency between two end nodes, with no association to throughout. Round-trip time is a measurement of packet delay on both the outbound and the return path together, which is of minor relevance for delay-sensitive applications that are predominantly concerned with the outbound path. Jitter is an estimation of packet delay variation which, while important for delay-sensitive applications, also does not bind a maximum throughout target. This is also true for packet loss.

Such measurements therefore only provide guidelines for delay-sensitive applications, when further optimisation of data traffic flows is required for maximising throughput and meeting critical delay-sensitive targets across end-to-end network paths.

An improved method of estimating the capacity of a path within a data communication network is therefore required, and a system embodying this method, which mitigate at least the above shortcomings of the prior art.

### Summary of the Invention

The invention relates to a system and method, as set out in the appended claims, for estimating the capacity of a path within a communication network, whilst meeting specified targets on maximum packet delay within a probability bound or Quality of Service target. This measurement is termed the effective capacity, abbreviated EC, and is a metric of the end-to-end path which provides an upper bound on the throughput available to an application between the two end nodes of the path, whilst ensuring that targets on one-way packet delay are maintained.

The invention works by injecting traffic into a path between a source node and a target, or 'sink' node at different rates, and measuring the one-way packet delay distribution at the sink node. The traffic is referred to as a packet train, wherein each packet train is forwarded at a specified constant bit rate and contains a specified number of data packets. When each packet train arrives at the sink node, a packet delay distribution is calculated and, when this distribution matches the target Quality of Service requirements, the transmission rate is found to be the effective capacity of the network path.

According to an aspect of the present invention, there is therefore provided a method of estimating data throughput between at least two nodes in a data communication network comprising at least two networked data communication devices respectively configured as a source node and a sink node, the method comprising the steps of setting a maximum packet delay target parameter (d_{Max}) and a violation probability target parameter (p_{Delay}); sending a predetermined number of data packets from the source node to the sink node according to a first constant data transmission rate R; receiving the predetermined number of data packets at the sink node and calculating a packet delay distribution and a probability (Vᵢₒₗ) of violating the maximum packet delay target parameter (d_{Max}) based on the calculated distribution; and determining whether the calculated probability (Vᵢₒₗ) is equivalent to the violation probability target p_{Delay}, the rate R constituting the data throughput capacity between the at least two nodes when the condition is true.

In an embodiment of the method according to the invention, the network comprises at least a further data communication device configured as an effective capacity server, the steps of setting the maximum packet delay target parameter (d_{Max}) and violation probability target parameter (p_{Delay}) are processed by the server, and the method comprises the further step of communicating the parameters to at least the source node.

In an embodiment of the method according to the invention, the method preferably comprises the further step of increasing the transmission rate R when the calculated probability (Vᵢₒₗ) is inferior to the violation probability target P_{Delay}.

In an embodiment of the method according to the invention, the method preferably comprises the further step of decreasing the transmission rate R when the calculated probability (Vᵢₒₗ) is superior to the violation probability target p_{Delay}.

In an embodiment of the method according to the invention, the method preferably comprises the further step of resending the predetermined number of data packets from the source node to the sink node according to the increased or decreased transmission rate R.

According to another aspect of the present invention, there is also provided a system for estimating data throughput between at least two nodes in a data communication network, comprising at least two networked data communication devices respectively configured as a source node and a sink node, wherein the system is configured to set a maximum packet delay target parameter (d_{Max}) and a violation probability target parameter (p_{Delay}); the source node is configured to send a predetermined number of data packets to the sink node according to a first constant data transmission rate R; and the sink node is configured to receive the predetermined number of data packets, calculate a packet delay distribution and a probability (Vᵢₒₗ) of violating the maximum packet delay target parameter (d_{Max}) based on the calculated distribution, and determine whether the calculated probability (Vᵢₒₗ) is equivalent to the violation probability target p_{Delay}, the rate R constituting the data throughput capacity between the at least two nodes when the condition is true.

In an embodiment of the system according to the invention, the system preferably further comprises an effective capacity server configured to set the maximum packet delay target parameter (d_{Max}) and violation probability target parameter (P_{Delay}), and to communicate the parameters to at least the source node.

In an embodiment of the system according to the invention, the sink node is preferably further configured to increase the transmission rate R when the calculated probability (Vᵢₒₗ) is inferior to the violation probability target P_{Delay}.

In an embodiment of the system according to the invention, the sink node is preferably further configured to decrease the transmission rate R when the calculated probability (Vᵢₒₗ) is superior to the violation probability target p_{Delay}.

In an embodiment of the system according to the invention, the source node is preferably further configured to resend the predetermined number of data packets to the sink node according to the increased or decreased transmission rate R.

For any of the above embodiments and further variants, any in the plurality of data communication devices may be selected from the group comprising mobile telephone handsets, tablet computers, portable computers, personal digital assistants, portable media players, portable game consoles.

According to yet another aspect of the present invention, there is also provided a set of instructions recorded on a data carrying medium which, when processed by a data processing terminal connected to a network, configures the terminal to perform the steps of setting a maximum packet delay target parameter (d_{Max}) and a violation probability target parameter (P_{Delay}); instructing a first remote terminal configured as a source node to send a predetermined number of data packets across the network to a second remote terminal configured as a source node according to a first constant data transmission rate R; and instructing the second remote terminal to receive the predetermined number of data packets, calculate a packet delay distribution and a probability (Vᵢₒₗ) of violating the maximum packet delay target parameter (d_{Max}) based on the calculated distribution, and determine whether the calculated probability (Vᵢₒₗ) is equivalent to the violation probability target P_{Delay}, the rate R constituting the data throughput capacity between the at least two nodes when the condition is true.

The set of instructions preferably further configures the terminal to perform the steps of instructing the second remote terminal to increase or decrease the transmission rate R when the condition is false and to request the first remote terminal to resend the predetermined number of data packets across the network according to the increased or decreased transmission rate R.

The set of instructions may be advantageously embodied as an application package file ('APK') for use with the Android™ operating system or embodied as an iPhone™ application archive ('IPA') for use with the iOS™ operating system.

### Brief Description of the Drawings

For a better understanding of the invention and to show how the same may be carried into effect, there will now be described by way of example only, specific embodiments, methods and processes according to the present invention with reference to the accompanying drawings in which:
Figure 1 shows a network environment comprising a plurality of mobile and static data communication devices remote from one another and connected to one for data communication, amongst which is at least one effective capacity estimation server.
Figure 2 is a logical diagram of a typical hardware architecture of a mobile data communication device shown in Figure 1, including memory means.
Figure 3 is a logical diagram of a typical hardware architecture of a static data communication device shown in Figure 1, including memory means.
Figure 4 details the data processing steps of an embodiment of the method.
Figure 5 is a logical diagram of the contents of the memory means of each data communication device shown in Figures 1, 2 and 3, except the at least one effective capacity estimation server, when performing the method of Figure 4, including a first set of instructions.
Figure 6 is a logical diagram of the contents of the memory means of the at least one effective capacity estimation server shown in Figures 1 and 3 when performing the method of Figure 4, including a second set of instructions and a database.
Figure 7 illustrates details of the data stored in the database shown in Figure 6.

### Detailed Description of the Embodiments

There will now be described by way of example a specific mode contemplated by the inventors. In the following description numerous specific details are set forth in order to provide a thorough understanding. It will be apparent however, to one skilled in the art, that the present invention may be practiced without limitation to these specific details. In other instances, well known methods and structures have not been described in detail so as not to unnecessarily obscure the description.

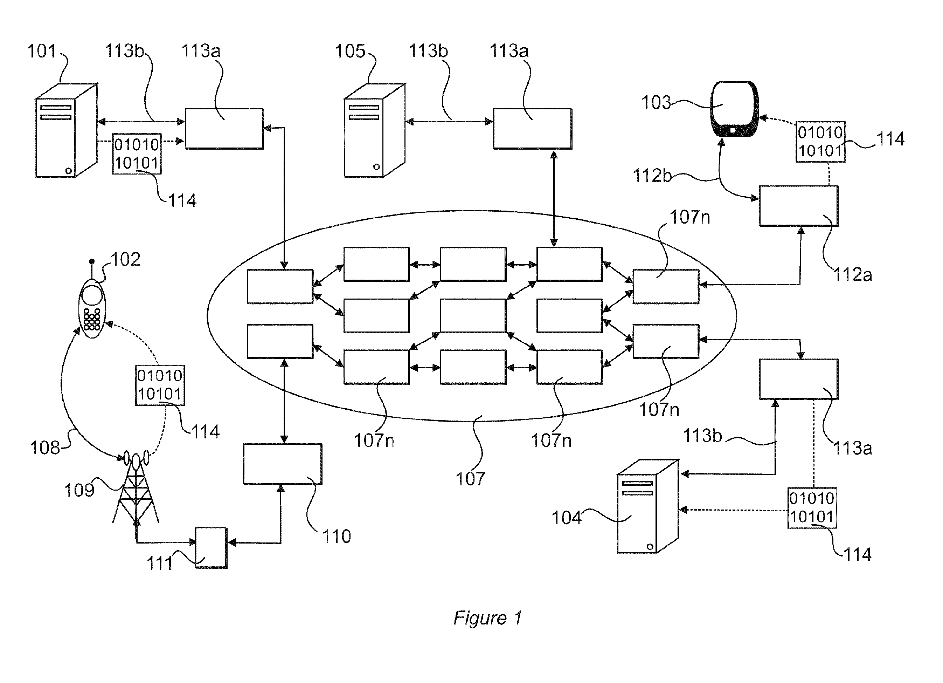

With reference to Figure 1, an example embodiment of a system according to the invention is shown within a networked environment.

The networked environment includes a source node 101 configured to store and broadcast audio video data to a plurality of target nodes 102, 103, 104 on demand, and an effective capacity estimation server 105. The audio video data is for instance movies, broadcast programmes, music tracks and the like, and it will be readily understood by the skilled reader that audio video streaming on demand is described herein as a non-limitative example of a delay-sensitive data distributing application.

The audio video data is broadcast as a digital stream of data packets 106 over a Wide Area Network 107, in the example the Internet. Any number of data processing devices with wired and/or wireless Wide Area Network connectivity, such as the mobile data communication devices 102, 103 and the personal computer 104 of the example, may thus receive the audio video data and reproduce same through one or more sound reproducing and video displaying devices integrated or connected thereto.

The or each mobile data communication device, for instance a mobile telephone handset 102, may have wireless telecommunication emitting and receiving functionality over a cellular telephone network configured according to the Global System for Mobile Communication ('GSM'), General Packet Radio Service ('GPRS'), International Mobile Telecommunications-2000 (IMT - 2000, 'W-CDMA' or '3G') network industry standards, and wherein telecommunication is performed as voice, alphanumeric or audio-video data using the Short Message Service ('SMS') protocol, the Wireless Application protocol ('WAP') the Hypertext Transfer Protocol ('HTTP') or the Secure Hypertext Transfer Protocol ('HTTPS').

Each mobile communication device 102 receives or emits voice, text, audio and/or image data encoded as a digital signal over a wireless data transmission 108, wherein the signal is relayed respectively to or from the device by the geographically-closest communication link relay 109 of a plurality thereof. The plurality of communication link relays 109 allows digital signals to be routed between each device 102, 103 and their destination by means of a remote gateway 110 via a MSC or base station 111. Gateway 110 is for instance a communication network switch, which couples digital signal traffic between wireless telecommunication networks, such as the cellular network within which wireless data transmissions 108 take place, and the Wide Area Network 107. The gateway 110 further provides protocol conversion if required, for instance whether a device 102 uses the WAP or HTTPS protocol to communicate data.

Alternatively, or additionally, the or each mobile data communication device, for instance a portable tablet computer 103, may have wired and/or wireless telecommunication emitting and receiving functionality over, respectively, a wired Local Area Network ('LAN') and/or a wireless local area network ('WLAN') conforming to the 802.11 standard ('Wi-Fi'). In the LAN or WLAN, telecommunication is likewise performed as voice, alphanumeric and/or audio-video data using the Internet Protocol (IP), Voice data over IP ('VoIP') protocol, Hypertext Transfer Protocol ('HTTP') or Secure Hypertext Transfer Protocol ('HTTPS'), the signal being relayed respectively to or from the mobile data communication device 103 by a wired (LAN) or wireless (WLAN) router 112a interfacing the mobile data communication device 103 to the WAN communication network 107 via a local wireless connection 112b. Either or both the mobile telephone handset 102 and the portable tablet computer 103 may have wireless telecommunication emitting and receiving functionality over the WLAN in addition to GSM, GPRS, W-CDMA and/or 3G.

A typical mobile data communication device 102, 103 apt to use the system according to the invention is preferably that commonly referred to as a 'smartphone' 102 and may for instance be an iPhone™ handset manufactured by the Apple Corporation or a Nexus One™ handset manufactured for Google, Inc. by the HTC Corporation. Generally, the mobile data communication device 102, 103 may be any portable data processing device having at least wireless communication means apt to receive a data communication from, and broadcast same to, another node in the networked environment. It will therefore be readily understood by the skilled person from the present disclosure, that one or more of the mobile data communication devices 102, 103 may instead be a portable computer commonly referred to as a 'laptop' or 'netbook', a tablet computer such as an Apple™ iPad™ or a Motorola™ XOOM™, a personal digital assistant such as an Hewlett-Packard™ iPaq™, a portable media player such as an Archos™ Android™ PMP, or even a portable game console such as a Sony™ Playstation™ Vita™.

Each data processing terminal 101, 104, 105 emits and receives data encoded as a digital signal over a wired data transmission conforming to the IEEE 802.3 ('Gigabit Ethernet') standard, wherein the signal is relayed respectively to or from the computing device by a respective wired router 113a interfacing the computing device 101, 104, 105 to the WAN communication network 107 via a local wired connection 113b. Generally, each data processing terminal 101, 104, 105 may be any portable or desktop data processing device having at least networking means apt to receive a data communication from, and broadcast same to, another node in the networked environment.

According to the invention, in the communication network of Figure 1, wherein router and switch nodes 107n control the flow of data traffic between data processing terminals 101 to 105, the effective capacity estimation server 105 communicates via the communication network to the source terminal 101 to set up a new measurement session between the source terminal 101 and any target, or 'sink' terminal 102, 103, 104. The source terminal 101 will initiate a measurement session with one selected from sink' terminals 102, 103, 104 by sending a flow of data traffic 114 at a specified data transmission rate through the communication network to the selected sink terminal . If another measurement session is required, the effective capacity estimation server 105 will forward another request to the source terminal 101 with instructions to begin another measurement session. Once the measurement session is complete and an estimation of effective capacity has been found, the selected sink terminal 102, 103, 104 will return the result to the effective capacity estimation server 105.

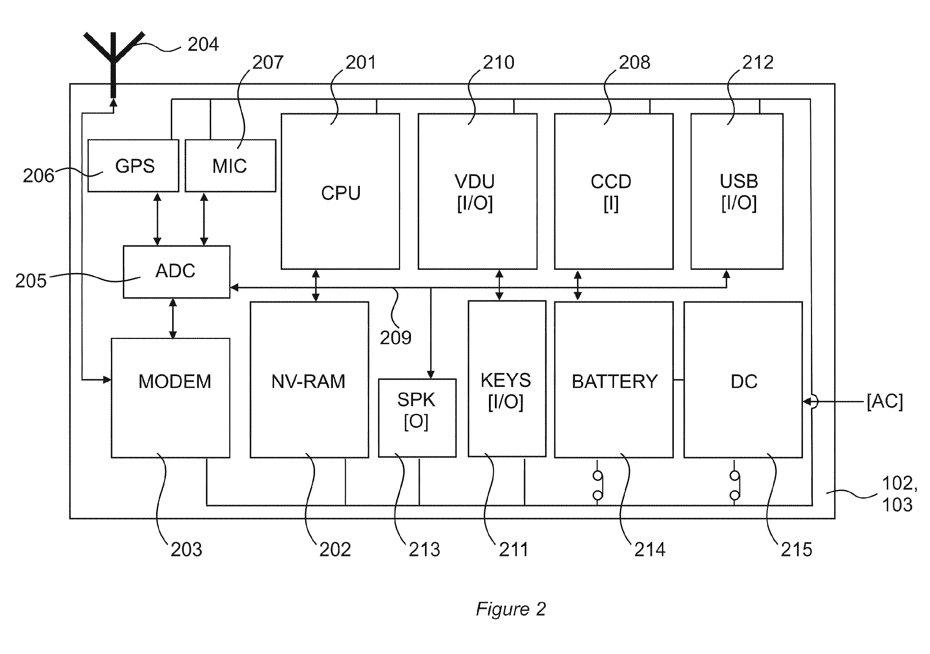

A typical hardware architecture of a mobile telephone handset 102 or tablet computer 103 is shown in Figure 2 in further detail, by way of non-limitative example. The handset 102 firstly includes a data processing unit 201, for instance a general-purpose microprocessor ('CPU'), acting as the main controller of the handset 102 and which is coupled with memory means 202, comprising non-volatile random-access memory ('NVRAM').

The mobile telephone handset 102 further includes a modem 203 to implement the wireless communication functionality, as the modem provides the hardware interface to external communication systems, such as the GSM or GPRS cellular telephone network 109, 110, 111 shown in Figure 1. An aerial 204 coupled with the modem 203 facilitates the reception of wireless signals from nearby communication link relays 109. The modem 203 is interfaced with or includes an analogue-to-digital converter 205 ('ADC') for demodulating wavelength wireless signals, for instance the data packet train 11X communicated by the source node 101, or audio video audio data likewise communicated by the source node 101.

The handset 102 further includes self-locating means in the form of a GPS receiver 206, wherein the ADC 205 receives analogue positional and time data from orbiting satellites (not shown), which the data processing unit 201 or a dedicated data processing unit processes into digital positional and time data.

The handset 102 further includes a sound transducer 207, for converting ambient sound waves, such as the user's voice for a delay-sensitive VolP application, into an analogue signal, which the ADC 205 receives for the data processing unit 201 or a dedicated data processing unit to process into digital first audio data.

The handset 102 may optionally further include imaging means 208 in the form of an electronic image sensor, for capturing image data which the data processing unit 201 or a dedicated data processing unit processes into digital image data.

The CPU 201, NVRAM 202, modem 203, GPS receiver 206, microphone 207 and optional digital camera 208 are connected by a data input/output bus 209, over which they communicate and to which further components of the handset 102 are similarly connected, in order to provide wireless communication functionality and receive user interrupts, inputs and configuration data.

Alphanumerical and/or image data processed by CPU 201 is output to a video display unit 210 ('VDU'), from which user interrupts may also be received if it is a touch screen display. Further user interrupts may also be received from a keypad 211 of the handset, or from an external human interface device ('HiD') connected to the handset via a Universal Serial Bus ('USB') interface 212. The USB interface advantageously also allows the CPU 201 to read data from and/or write data to an external or removable storage device. Audio data processed by CPU 201 is output to a speaker unit 213. Power is provided to the handset 102 by an internal module battery 214, which an electrical converter 215 charges from a mains power supply as and when required.

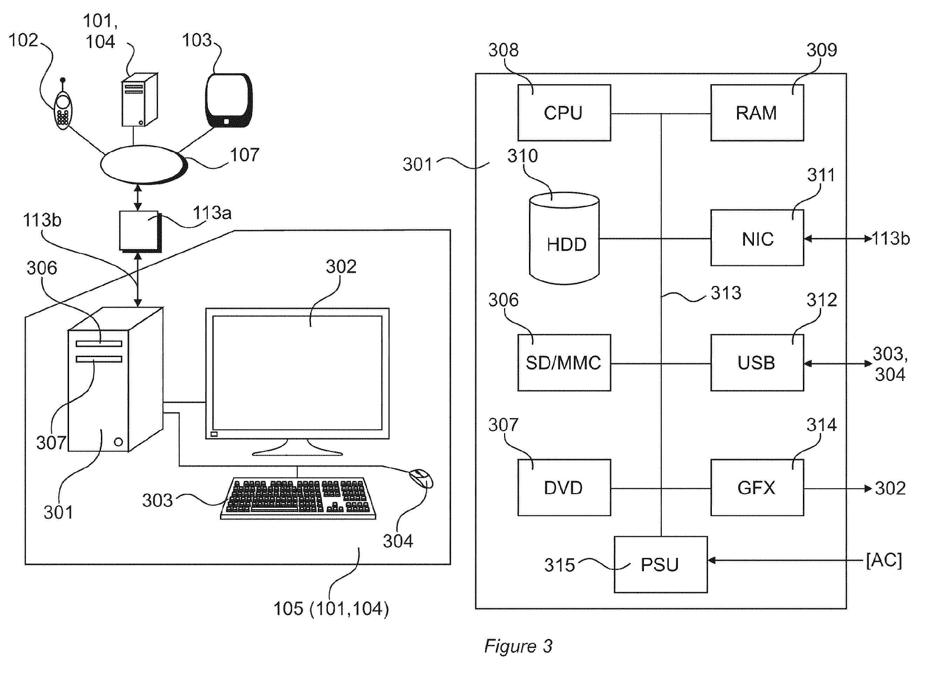

A typical hardware architecture of each of the data processing terminals 101, 104, 105 is now shown in Figure 3 in further detail, by way of non-limitative example. Each data processing device 101, 104, 105 is a computer configured with a data processing unit 301, data outputting means such as a video display unit (VDU) 302, data inputting means such as HiD devices, commonly a keyboard 303 and a pointing device (mouse) 304, as well as the VDU 302 itself if it is a touch screen display, and data inputting/outputting means such as the wired network connection 113b to the communication network 107 via the router 113a, a solid state data-carrying medium reader/writer 306 and an optical data-carrying medium reader/writer 307.

Within data processing unit 301, a central processing unit (CPU) 308 provides task co-ordination and data processing functionality. Sets of instructions and data for the CPU 308 are stored in memory means 309 and a hard disk storage unit 310 facilitates non-volatile storage of the instructions and the data. A wireless network interface card (NIC) 311 provides the interface to the network connection 113b. A universal serial bus (USB) input/output interface 312 facilitates connection to the keyboard and pointing devices 303, 304.

All of the above components are connected to a data input/output bus 313, to which the solid state data-carrying medium reader/writer 306 and optical data-carrying medium reader/writer 307 are also connected. A video adapter 314 receives CPU instructions over the bus 313 for outputting processed data to VDU 302. All the components of data processing unit 301 are powered by a power supply unit 315, which receives electrical power from a local mains power source and transforms same according to component ratings and requirements.

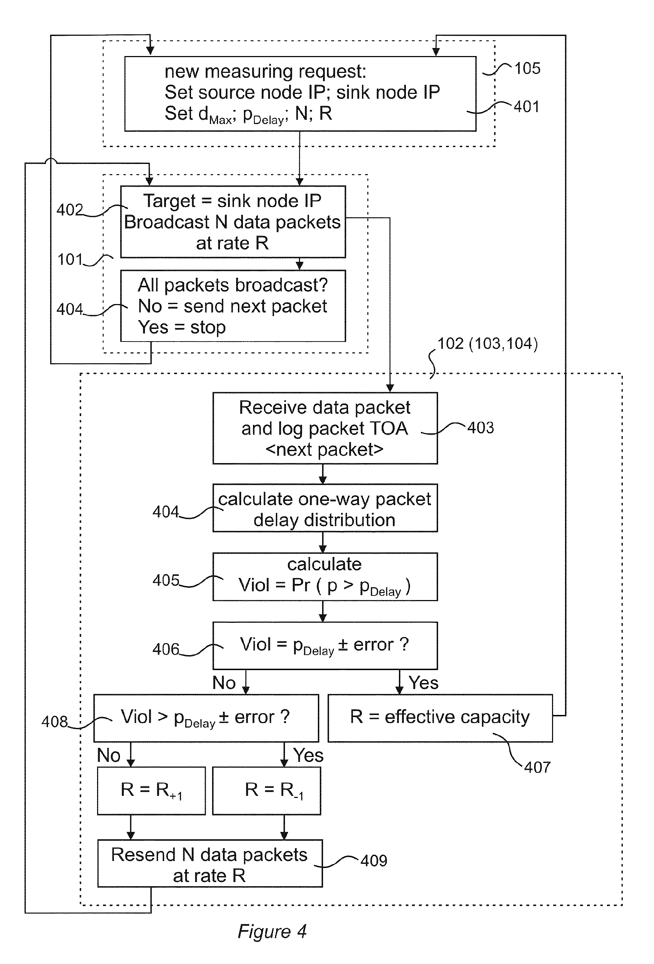

Figure 4 details the data processing steps of an embodiment of the method, performed in the environment of Figure 1 with the effective capacity estimation server 105, terminal 101 as a source node 101 and any one of the terminals 102, 103, 104 as a target node.

At step 401, the effective capacity estimation server 105 receives a request for a new measurement session and initializes parameters for same. This involves setting a maximum data packet delay target d_{Max} and an associated violation probability target p_{Delay}, setting an initial, constant data packet transmission rate or 'probe rate' R, setting a number of K data packets to be forwarded in each packet train or 'probe length' N, and setting both the source node 101 and the sink node 102, 103 or 104 to be involved for the measurement.

At step 402, the source node 101 initiates a measurement session at the selected sink node 102, 103 or 104 according to the configurations set up by the server at step 401. Accordingly, the source node 101 begins sending, or 'injecting', the first data packet train into the network path to the selected sink node.

At step 403, the selected sink node 102, 103 or 104 collects the data packets within the packet train, noting the time of arrival of each data packet in a log. When the packet train N is complete, at step 404, the source node 101 interrupts the data packet injection and the selected sink node calculates the one-way data packet delay distribution from the data packets collected. The distribution of the one-way packet delay is measured and analyzed to see if the proportion of packets being delayed greater than a given delay bound is higher than a given violation probability threshold. A one-way delay Quality of Service target may take the form of (Max one way delay 100ms, Violation Threshold 0.001). This expression means that the probability of packets being delayed greater than 100ms is 0.001.

At step 405, the selected sink node 102, 103 or 104 evaluates whether the packet delay distribution collected for the assigned probe rate R matches or meets the Quality of Service targets, and a question is asked at step 406, as to whether the relationship is satisfied, that is to say the probability Vᵢₒₗ of violating the maximum packet delay target d_{Max} is equivalent to the violation probability target p_{Delay} (to within a margin of error). If the question of step 406 is answered positively, the transmission rate R is reported by the selected sink node 102, 103 or 104 to the effective capacity estimation server 105 at step 407, as the effective capacity of the network path between the source node 101 and the selected sink node.

Alternatively, when the question of step 406 is answered negatively, then a further question is asked at step 408, as to whether the calculated violation probability Vᵢₒₗ according to the last configuration of step 401 is higher than the violation probability target p_{Delay}. If the question of step 408 is answered positively, then the selected sink node 102, 103 or 104 recalculates a new, decreased transmission rate R₋₁. Alternatively, when the question of step 408 is answered negatively, then the selected sink node 102, 103 or 104 recalculates a new, increased transmission rate R₊₁. At step 409, the selected sink node 102, 103 or 104 communicates the new transmission rate R₊₁, R₋₁ to the source node 101 in a request to retransmit a further packet train N at new rate the new transmission rate R₊₁, R₋₁. The method thus returns to step 402, the method steps being processed iteratively until the question of step 406 is answered positively, when an effective capacity value is eventually obtained.

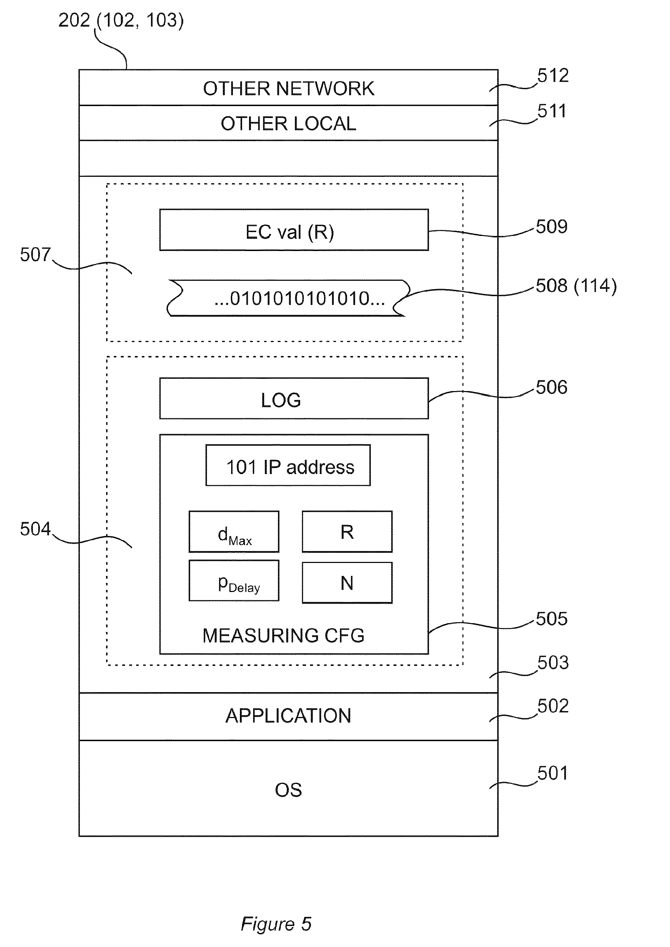

Figure 5 is a logical diagram of the contents of the memory means 202 of each mobile or static data communication device 101, 102, 103, 104 when performing steps 402 to 409 at runtime. An operating system is shown at 501 which, depending on the terminal type and manufacturer, may be iOS 5™ developed and distributed by Apple Inc., Android™ developed and distributed by Google Inc. or Windows 7™ developed and distributed by the Microsoft Corporation.

An application is shown at 502, which configures the data communication device 101, 102, 103, 104 to perform at least processing steps 402 to 409 as described hereinbefore, as either a source node or a sink node. The application is interfaced with the OS 501 via one or more suitable Application Programmer Interfaces. The application is either an application package file ('APK') for use with the Android™ operating system 501, readily installed on a mobile handset 102 from the effective capacity estimation server 105 via the Android Market™, or an iPhone™ application archive ('IPA') for use with the iOS™ operating system 501, readily installed on the mobile handset 102 or tablet computer 103 from the effective capacity estimation server 105 via the AppStore™, or a Windows binary executable readily downloaded from the effective capacity estimation server 105 via the Internet 107.

Application data is shown at 503, which comprises local and network data. Local data 504 comprises the measuring session configuration 505 of step 401 received from the effective capacity estimation server 105, and the log 506 of the time of arrival of each data packet in the train of step 403.

Network data 507 comprises the data packets 508 injected into the network path when the data communication device 101, 102, 103, 104 is a source node, or received when the data communication device 101, 102, 103, 104 is a sink node,as well as the effective capacity value R 509 of step 406 and any request 510 to retransmit a further packet train N at new rate the new transmission rate R₊₁, R₋₁. The memory 202 may further comprise local and/or network data that is unrelated to application 502, respectively shown at 511 and 512, for instance used by or generated for another application being processed in parallel with application 502.

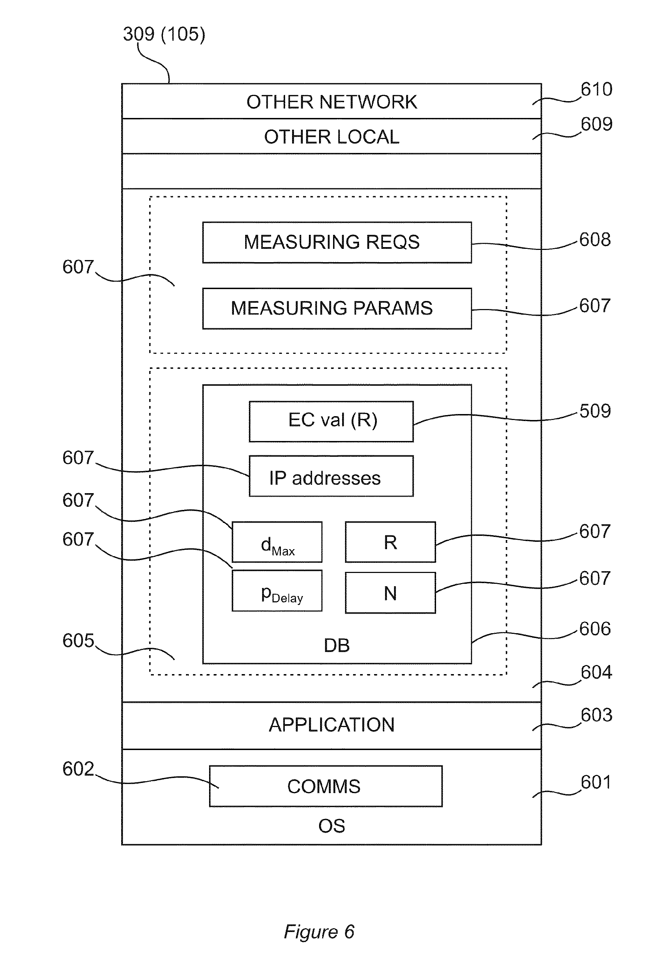

Figure 6 is a logical diagram of the contents of the memory means 309 of the effective capacity estimation server 105, when performing steps 401 and 406 at runtime. An operating system is shown at 601 which, if the server 105 is a desktop computer, is for instance Windows 7™ distributed by the Microsoft Corporation. The OS 601 includes communication subroutines 602 to configure the terminal for bilateral network communication via the NIC 311. An application is shown at 603, which configures the server 101 to perform at least processing step 401 and 406 as described hereinbefore, and which is interfaced with the OS 601 and network communication subroutines 602 thereof via one or more suitable Application Programmer Interfaces.

Application data is shown at 604, which comprises local and network data. Local data 605 comprises a database 606 of parameters 607 for measurement sessions in respect of source and sink nodes 101, 102, 103, 104 as set according to step 401, and the respective effective capacity values R 509 determined for same according to step 406 and stored therein by way of update.

Network data 607 comprises requests 608 for measurement sessions from networked terminals 101, 102, 103, 104 and the resulting initialising parameters 607 of step 401, including maximum data packet delay targets d_{Max}, associated violation probability targets p_{Delay}, constant data packet transmission rates Rₙ, numbers of K data packets to be forwarded in packet trains N, and relevant source and sink nodes 101, 102, 103 or 104 to be involved for each measurement.

The memory 309 may further comprise local and/or network data that is unrelated to application 603, respectively shown at 609 and 610, for instance used by or generated for another application being processed in parallel with application 603.

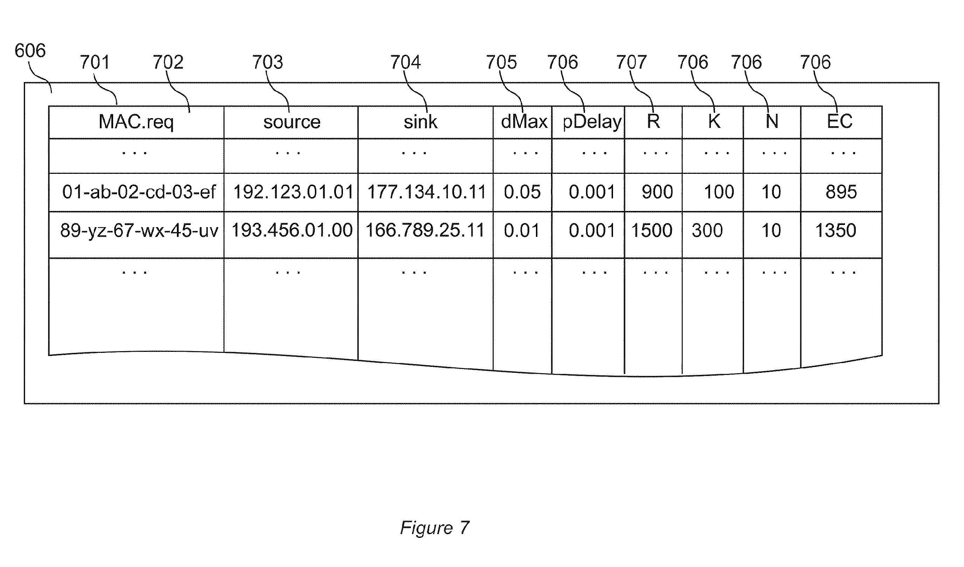

Figure 7 provides an example of the contents of the database 606 stored by the server 105 and processed by the application 603. The database 606 is relational and comprises a plurality of data structures, in the example data tables 701, wherein data is organized logically. Thus, at least a first table 701 stores information about each measuring request, wherein the requesting terminal is indicated with a unique identifier 702, against which the measuring parameters established at step 401 are stored, thus including the source node 101 network address 703, the sink node 102, 103 or 104 network address 704, a maximum data packet delay target d_{Max} 705, an associated violation probability target p_{Delay} 706, the initial, constant data packet transmission rate or 'probe rate' R 707, the number 708 of K data packets to be forwarded in each packet train or 'probe length' N 709 and, when the table 701 is updated according to step 407, the effective capacity 710 of the network path between the network addresses 703, 704.

The present invention thus provides an improved method, and a corresponding system, for reliably estimating the capacity of a data path within a data communication network, whilst meeting specified targets on maximum packet delay within a probability bound or Quality of Service target. Likely applications for the method include, by way of non-limitative example, voice over IP, video conferencing, peer-to-peer data streaming, end-to-end virtual path monitoring, unified communications monitoring, optimal placement of delay-sensitive cloud storage services, delay-sensitive routing protocols, support for network topology management and applications when dimensioning a network for delay-sensitive applications.

The embodiments in the invention described with reference to the drawings comprise a computer apparatus and/or processes performed in a computer apparatus. However, the invention also extends to computer programs, particularly computer programs stored on or in a carrier adapted to bring the invention into practice. The program may be in the form of source code, object code, or a code intermediate source and object code, such as in partially compiled form or in any other form suitable for use in the implementation of the method according to the invention. The carrier may comprise a storage medium such as ROM, e.g. CD ROM, or magnetic recording medium, e.g. a floppy disk or hard disk. The carrier may be an electrical or optical signal which may be transmitted via an electrical or an optical cable or by radio or other means.

In the specification the terms "comprise, comprises, comprised and comprising" or any variation thereof and the terms include, includes, included and including" or any variation thereof are considered to be totally interchangeable and they should all be afforded the widest possible interpretation and vice versa.

The invention is not limited to the embodiments hereinbefore described but may be varied in both construction and detail.

## Claims

1. A method of estimating data throughput between at least two nodes in a data communication network comprising at least two networked data communication devices respectively configured as a source node and a sink node, the method comprising the steps of
setting a maximum packet delay target parameter (d_{Max}) and a violation probability target parameter (p_{Delay});
sending a predetermined number of data packets from the source node to the sink node according to a first constant data transmission rate R;
receiving the predetermined number of data packets at the sink node and calculating a packet delay distribution and a probability (Vᵢₒₗ) of violating the maximum packet delay target parameter (d_{Max}) based on the calculated distribution; and
determining whether the calculated probability (Vᵢₒₗ) is equivalent to the violation probability target p_{Delay}, the rate R constituting the data throughput capacity between the at least two nodes when the condition is true.

2. A method according to claim 1, wherein the network comprises at least a further data communication device configured as an effective capacity server, wherein the steps of setting the maximum packet delay target parameter (d_{Max}) and violation probability target parameter (p_{Delay}) are processed by the server, and the method comprises the further step of communicating the parameters to at least the source node.

3. A method according to claim 2 or 3, comprising the further step of increasing the transmission rate R when the calculated probability (Vᵢₒₗ) is inferior to the violation probability target P_{Delay}.

4. A method according to claim 2 or 3, comprising the further step of decreasing the transmission rate R when the calculated probability (Vᵢₒₗ) is superior to the violation probability target P_{Delay}.

5. A method according to claim 3 or 4, comprising the further step of resending the predetermined number of data packets from the source node to the sink node according to the increased or decreased transmission rate R.

6. A system for estimating data throughput between at least two nodes in a data communication network, comprising at least two networked data communication devices respectively configured as a source node and a sink node, wherein
the system is configured to set a maximum packet delay target parameter (d_{Max}) and a violation probability target parameter (p_{Delay});
the source node is configured to send a predetermined number of data packets to the sink node according to a first constant data transmission rate R; and
the sink node is configured to receive the predetermined number of data packets, calculate a packet delay distribution and a probability (Vᵢₒₗ) of violating the maximum packet delay target parameter (d_{Max}) based on the calculated distribution, and determine whether the calculated probability (Vᵢₒₗ) is equivalent to the violation probability target p_{Delay}, the rate R constituting the data throughput capacity between the at least two nodes when the condition is true.

7. A system according to claim 6, wherein the system further comprises an effective capacity server configured to set the maximum packet delay target parameter (d_{Max}) and violation probability target parameter (p_{Delay}), and to communicate the parameters to at least the source node.

8. A system according to claim 6 or 7, wherein the sink node is further configured to increase the transmission rate R when the calculated probability (Vᵢₒₗ) is inferior to the violation probability target p_{Delay}.

9. A system according to claim 6 or 7, wherein the sink node is further configured to decrease the transmission rate R when the calculated probability (Vᵢₒₗ) is superior to the violation probability target p_{Delay}.

10. A system according to claim 8 or 9, wherein the source node is further configured to resend the predetermined number of data packets to the sink node according to the increased or decreased transmission rate R.

11. A method according to any of claims 1 to 5, wherein any in the plurality of mobile data communication devices is selected from the group comprising mobile telephone handsets, tablet computers, portable computers, personal digital assistants, portable media players, portable game consoles.

12. A set of instructions recorded on a data carrying medium which, when processed by a data processing terminal connected to a network, configures the terminal to perform the steps of
setting a maximum packet delay target parameter (d_{Max}) and a violation probability target parameter (p_{Delay});
instructing a first remote terminal configured as a source node to send a predetermined number of data packets across the network to a second remote terminal configured as a source node according to a first constant data transmission rate R; and
instructing the second remote terminal to receive the predetermined number of data packets, calculate a packet delay distribution and a probability (Vᵢₒₗ) of violating the maximum packet delay target parameter (d_{Max}) based on the calculated distribution, and determine whether the calculated probability (Vᵢₒₗ) is equivalent to the violation probability target P_{Delay}, the rate R constituting the data throughput capacity between the at least two nodes when the condition is true.

13. A set of instructions according to claim, further configuring the terminal to instruct the second remote terminal to increase or decrease the transmission rate R when the condition is false and to request the first remote terminal to resend the predetermined number of data packets across the network according to the increased or decreased transmission rate R.

14. A set of instructions according to claim, embodied as an application package file ('APK') for use with the Android™ operating system or embodied as an iPhone™ application archive ('IPA') for use with the iOS™ operating system.
